# EUROPEAN PATENT APPLICATION

(11) **EP 0 875 675 A2**
(43) Date of publication of application: **04.11.1998**
(21) Application number: 98107057.6
(22) Date of filing: 17.04.1998
(51) Int. Cl.: F02M 25/028, F02B 33/36

(54) **Engine supercharging system using screw supercharger**

(30) Priority: 30.04.1997 JP 112951/97
(71) Applicant: Ishikawajima-Harima Heavy Industries Co., Ltd., Chiyoda-ku, Tokyo (JP)
(72) Inventor: Yoshiyuki, Miyagi, Ichikawa-shi, Chiba (JP); Shigeru, Takabe, Sagamihara-shi Kanagawa (JP)
(74) Representative: Schaumburg, Thoenes & Thurn

(57) **Abstract**

The supercharging system for a vehicle engine (10) equipped with a screw supercharger (12). The screw supercharger (12) is connected to an intake air pipe (11), and a water feed mechanism (21) is connected to the intake air pipe (11a) upstream of the supercharger. An intake air flows in the engine (10) after compressed by the supercharger (12). Before the air enters the screw supercharger for compression, water is mixed with the intake air as fed from the water feed mechanism. Thus, a water-air mixture enters the supercharger and compressed therein. The water contained in the intake air reduces leakage of the compressed air from a body of the supercharger. The water also lowers the intake air temperature so that a volumetric efficiency is improved (i.e., larger amount of air can be introduced to the engine) and therefore an engine output is raised. Water feeding is also effective in knocking prevention.

## Description

The present invention generally relates to a supercharging system equipped with a supercharger connected to an engine of an automobile for supercharging an intake air, and more particularly to such a supercharging system employing a screw supercharger which can improve a fuel consumption rate of the engine and eliminate knocking of the engine.

In recent years, positive displacement screw superchargers are more used for automobiles instead of non-displacement superchargers.

The screw supercharger generally includes a male screw rotor and a female screw rotor engaged with each other, and these rotors are rotated by an engine to compress an intake air to be supplied to the engine.

In a conventional supercharging system for a vehicle, however, there is certain leakage of compressed air from a body of the screw supercharger. Therefore, its adiabatic temperature efficiency is inferior to a reversible adiabatic compression.

An ordinary gasoline engine provided with a screw supercharge has a carburetor up stream of the supercharger, and the carburetor feeds a mixture of gasoline and air to the screw supercharger. The gasoline reduces leakage of the compressed air and cools the compressed air. However, recent demands for a lower fuel consumption rate, higher output and less exhaust gas require that fuel injection takes place immediately upstream of or inside the engine. In other words, the fuel injection upstream of the supercharger is impossible.

One object of the present invention is to propose a supercharging system for an automobile engine equipped with a screw supercharger which can reduce leakage of the compressed air from a body of the supercharger, which can improve a fuel consumption rate of the engine and which can suppress knocking of the engine.

According to one embodiment of the present invention, there is provided a supercharging system for a vehicle engine comprising a screw supercharger connected to an intake air pipe, and a water feed mechanism connected to the intake air pipe upstream of the supercharger. An intake air flows in the engine after compressed by the screw supercharger. Fuel is injected inside the engine or immediately before the engine or downstream of the supercharger. Before the air enters the screw supercharger for compression, water is mixed with the intake air as fed from the water feed mechanism. Thus, a water-air mixture enters the supercharger and compressed therein. The water contained in the intake air reduces leakage of the compressed air from a body of the supercharger. The water also lowers the intake air temperature so that a volumetric efficiency is improved (i.e., larger amount of air can be introduced to the engine) and therefore an engine output is raised. Experiments further revealed that the water feeding is also effective in knocking prevention.

The water feed mechanism may include a water tank and a duty solenoid valve located between the water tank and intake air pipe. An amount of water to be mixed with the intake air is controlled by the duty solenoid valve according to various parameters such as a rotational speed of the supercharger and inclination of an accelerator pedal pedaled by a foot of a driver of a vehicle.
- Figure 1: illustrates a schematic sectional view of a supercharging system according to the present invention;
- Figure 2: illustrates a pressure-volume diagram showing an amount of work done by a screw supercharger;
- Figure 3: is a diagram illustrating the relationship between an amount of water to be fed to an intake air and a work needed to drive the supercharger;
- Figure 4A: is a diagram showing an engine load relative to an engine revolution speed when a vehicle is operated in a common manner;
- Figure 4B: is a diagram showing a supercharger load relative to a supercharger revolution speed;
- Figure 5: illustrates the relationship between a revolution speed of the supercharger and a duty ratio of a duty solenoid valve (amount of water allowed to pass through the solenoid valve);
- Figure 6: illustrates the relationship between an engine revolution speed and an engine load (maximum output of the engine without causing knocking: knocking limitation); and
- Figure 7: depicts the relationship between an engine revolution speed at a knocking limitation and a duty ratio of the solenoid valve.

Now, a preferred embodiment of the present invention will be described with reference to the accompanying drawings.

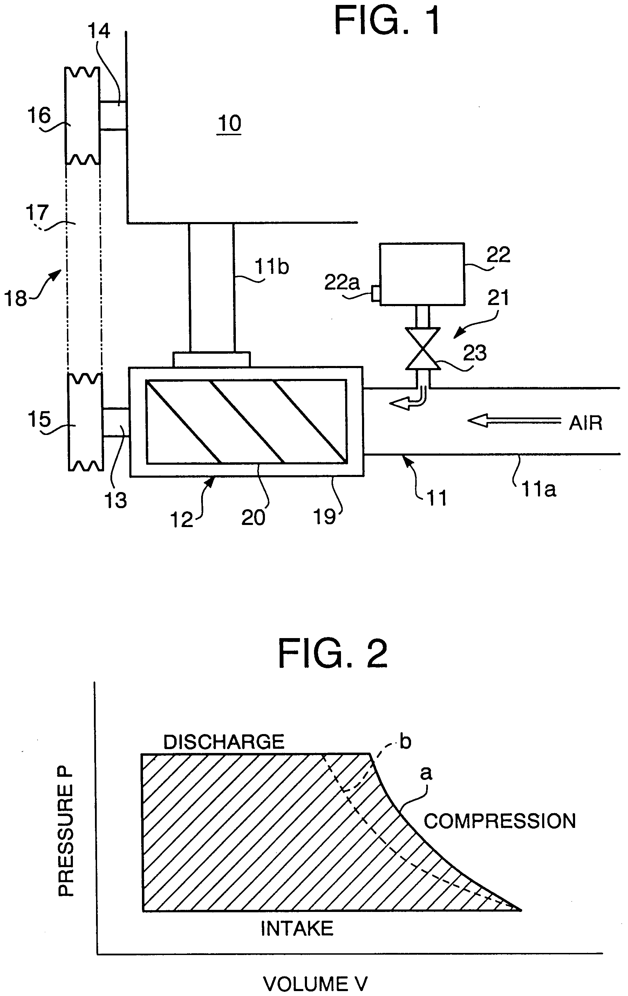

Referring to Figure 1, an engine 10 of an automobile or the like has an intake air pipe 11 and a screw supercharger 12 connected to the intake air pipe 11. The screw supercharger 12 compresses an intake air and compressed air is supplied to the engine 10. Fuel is injected inside the engine or just upstream of the engine or downstream of the supercharger 12. A shaft 13 of the screw supercharger 12 is connected to a crankshaft 14 of the engine 10 by a connection mechanism 18 including pulleys 15 and 16 and a belt 17.

Although not illustrated in detail, the screw supercharger 12 has a casing 19 and a couple of male and female screw rotors 20 engaged with each other. The screw rotors 20 rotate in the casing 19 to compress an intake air entering from an upstream pipe segment 11a of the intake air pipe 11, and it discharges a compressed air to a downstream pipe segment 11b. A water feed mechanism 21 is connected to the upstream pipe segment 11a to mix the intake air with water so as to prevent compressed air leakage from the supercharger 12 and to cool the compressed air. The water feed mechanism 21 includes a water tank 22 and a duty solenoid valve 23 which can arbitrarily adjust or determine an amount of water to be mixed with the intake air. A water surface sensor 22a is attached to the water tank 22 for detecting a remaining amount of water in the water tank 22. A detection signal is sent to a suitable indicator (not shown) from the sensor 22a.

The duty solenoid valve 23 can change a flow rate in proportion to its duty ratio. It is possible to change the duty ratio between 0% and 100%.

Although not illustrated, the duty ratio of the duty solenoid valve 23 is adjusted by a controller (not shown) according to a load condition (or running condition) of the engine 10 so as to adjust an amount of water to be fed to the intake air to an appropriate value. This controller is a controller which is originally provided for controlling the engine 10.

Now, an operation of the supercharging system of the invention will be described.

As the engine 10 is driven, the screw supercharger 12 is driven by the power transmission mechanism 18 such that an intake air flowing from the upstream air pipe 11a is compressed by the supercharger 12 and fed to the engine 10 from the supercharger 10 through the downstream air pipe 11b. During this air compression and feeding, some of the compressed air leaks from the screw supercharger 12. However, the water supplied to the upstream air pipe 11a and mixed with the intake air reduces the compressed air leakage and cools the compressed air. The compressed air is cooled by, for example, vaporization latent heat of the water. Because of this, volume efficiency and temperature efficiency are both improved, a work needed to drive the supercharger is reduced, and an outlet temperature of the super charger is lowered. Accordingly, the fuel consumption of the engine 10 is improved and knocking is suppressed. Experiments revealed that knocking is suppressed as the air temperature (at a supercharger exit) drops.

Advantages obtained by water feeding will now be described with reference to Figures 2 to 7.

Figure 2 illustrates P-V (pressure-volume) diagram to show a work of the screw supercharger 12. The screw supercharger 12 undergoes an intake process, compression process and discharge process, and returns to the intake process. The work done by the screw supercharger 12 is indicated by the oblique lines.

The compression curve of the conventional supercharging system which has no water feeding mechanism is indicated by the solid line a. The compression curve of the supercharging system according to the present invention is indicated the chain line b. As understood from this graph, its compression rate or compressibility of the present invention is better than the conventional arrangement. According to the present invention, the compression curve is shifted to the left in Figure 2 (from "a" to "b") . This means that an amount of work between the lines a and b is dispensed with by the invention.

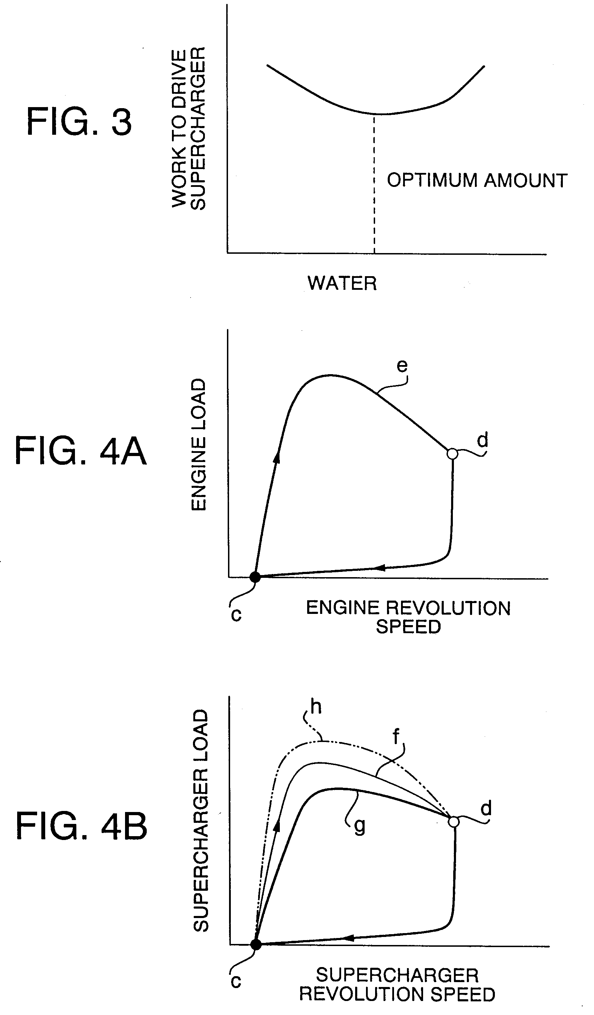

Figure 3 illustrates relationship between an amount of water to be fed to the supercharger 12 from the water tank 22 and a work needed to drive the supercharger 12 (i .e., work of the supercharger 12). The work needed to drive the supercharger 12 is determined according to a revolution speed of the rotors 20 and an air flow rate at an exit of the supercharger housing 19. The supercharger 12 is driven under a particular running condition whereas the amount of water is varied to acquire the work-water curve of Figure 3. If a larger work is necessary to drive the supercharger to obtain a predetermined output, it means that there is larger air leakage. If a less work is needed, it means that air leakage is smaller or reduced.

As understood from Figure 3, when an amount of water fed to the supercharger 12 is too large or too small, the work of the supercharger increases (the work generally draws a "U" curve). The work needed to drive the supercharger 12 is minimum at an approximate center of the curve as indicated by the vertical broken line. Therefore, there is a certain point or range for most effective amount of water to be fed under a particular running condition. This optimum range for water feeding tends to shift to the right in the graph of Figure 3 if the rotational speed of the rotors 20 is raised. In other words, the faster the rotors 20 rotate, the more the water should be fed. Experiments have revealed that the water is preferably supplied to the intake air pipe 11a in a range of 5% to 20% (weight) with respect to the intake air.

Now, it should be assumed that an automobile is operated in the following manner: idling --> acceleration --> constant speed --> deceleration --> idling. This series of operations represents the most common manner of driving.

Figure 4A shows relationship between an engine rotational speed and an engine load when the vehicle runs according to the above mentioned manner. In this drawing, the black dot "c" indicates the idling condition, the white dot "d" indicates the constant speed driving, and the curve "e" indicates the engine load.

The supercharger load when the engine is operated in the above mentioned manner is illustrated in Figure 4B. The supercharger load is basically determined by the air flow rate at the exit of the supercharger 12. The curve "f" indicates a case of no water feeding, the curve "g" indicates a case of optimum water feeding and the curve "h" indicates a case of excessive water feeding. The point "c" represents the idling and the point "d" represents the constant speed driving, which is the same as Figure 4A.

As obvious from Figure 4B, if an appropriate amount of water is fed to the supercharger 12 (the curve "g"), the supercharger load is reduced as compared with when no water is fed (the curve "f") from the idling condition to the constant speed driving. However, if an excessive amount of water is mixed with the intake air (the curve "h"), the supercharge load becomes larger than a case where no water is mixed with the intake air. This also proves that the amount of water to be mixed with the intake air should be controlled appropriately.

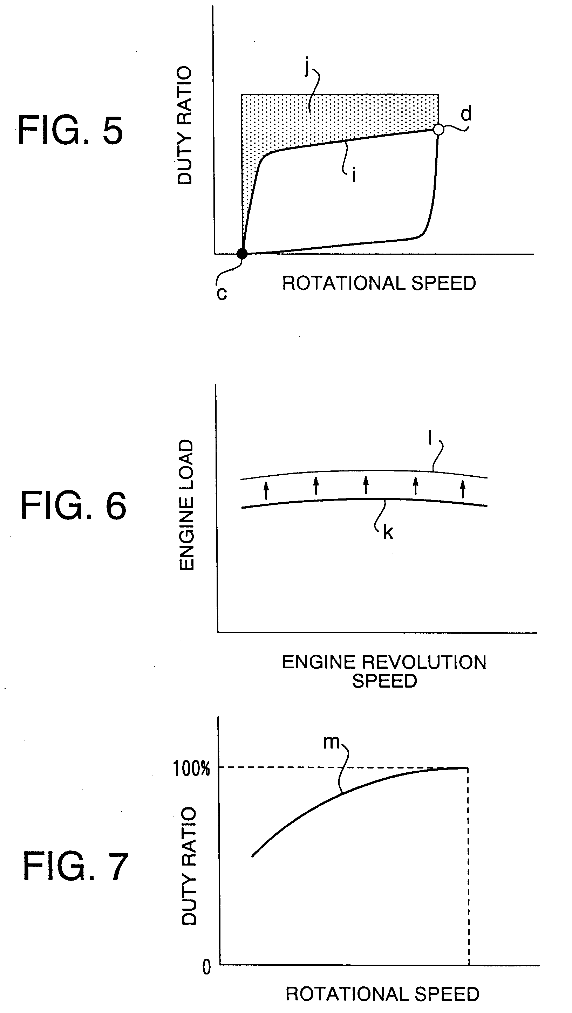

Figure 5 illustrates a duty ratio of the duty solenoid valve 23 relative to the revolution speed of the supercharger 12. The amount of water to be mixed with the intake air is controlled by the duty ratio of the solenoid valve 23 since the solenoid valve 23 of the water feed mechanism 21 determines how much water is allowed to flow into the intake air pipe 11a. The curve "i" in Figure 5 is drawn according to the curve "g" of Figure 4B and the optimum water range (vertical broken line) of Figure 3 and it indicates the optimum duty ratio curve. In other words, the minimum supercharger load relative to the supercharger rotational speed is determined from Figure 4B and the optimum water range is determined from Figure 3 so that the optimum water supplement relative to the supercharger rotational speed can be determined from Figures 4B and 3. The optimum water supplement is expressed in terms of duty ratio of the duty solenoid valve 23 and the control curve "i" is drawn. If a simple on-off valve is employed instead of the duty solenoid valve, there is a tendency that an excessive amount of water be supplied, and an adverse effect may result (shaded area "j" above the curve "i").

Control parameters to the duty ratio of the duty solenoid valve 23 includes a rotational speed of the supercharger 12 (or rotational speed of the engine 10), an air flow rate at the exit of the supercharger 12, an opening degree of an accelerator in a carburetor (or degree of inclination of an accelerator pedal pedaled by a driver's foot), a gear position (or shift position) of an engine transmission (e.g., "low", "2nd", "3rd" and "drive") and an air temperature. The water feeding according to the present invention is particularly advantageous when the air temperature is high.

Next, knocking prevention will be described. The engine output is improved or raised if the knocking is prevented.

Generally, the engine does not demonstrate its maximum output in an actual driving. An actual upper limit of the engine output is lower than a theoretical value due to knocking if the engine is a gasoline engine equipped with a supercharger.

In order to avoid the knocking, it is effective to lower the intake air temperature (i.e., the exit temperature of the supercharger 12).

Figure 6 illustrates the engine load relative to the engine revolution speed. The curve "k" indicates a limitation curve for knocking when no water is fed and the curve "l" indicates a knocking limitation when water is fed in the optimum manner. The "limitation for knocking" is a maximum engine load without causing knocking at a particular engine rotational speed. An optimum amount of water is mixed with the intake air using the duty solenoid valve 23 in this embodiment.

As understood from Figure 6, by appropriately controlling the amount of water to be fed, the knocking limitation curve is shifted upward (from "k" to "l" ), and the engine output is correspondingly raised. This is because the supercharger exit temperature is lowered by the water mixed with the intake air. In other words, the intake air temperature is lowered by the water fed from the water tank 22. The lower the intake air temperature, the more the intake air is fed to the engine. The engine output is improved if a larger amount of air is introduced to the engine. In particular, this is advantageous if the engine is not equipped with an intercooler.

Figure 7 illustrates a duty ratio relative to the supercharger revolution speed when the engine is operated in the maximum load condition as shown in Figure 6. This characteristic curve "m" is drawn by employing a duty solenoid valve of which duty ratio becomes 100% and the amount of water to be fed from the water tank 22 is optimum when the revolution speed of the supercharger 12 is maximum. The optimum duty ratio is determined by the revolution speed, the air flow rate, an opening degree of an accelerator, data obtained from a knocking sensor (including a kind of gasoline), an external air temperature, a temperature of a water flowing in the engine 10 and the like. The air temperature and water temperature are concerned because time and season as well as location and area would affect the optimum duty ratio.

It should be noted that the present invention is not limited to the above described embodiments. For example, the duty solenoid valve may be replaced with a valve controlled by a stepping motor. Further, a water temperature of the water in the water tank may be detected and may be used another parameter in controlling the duty ratio of the solenoid valve. In such a case, a water temperature sensor (not shown) may be provided in the water tank 22.

## Claims

1. A supercharging system for an engine (10), with an intake air being supplied to the engine (10) through an intake air pipe (11) extending to the engine (10), the supercharging system including a supercharger (12) connected to the intake air pipe (11), characterized in that a water feed mechanism (21) is connected to the intake air pipe (11a) upstream of the supercharger (12) for feeding water to the intake air such that a mixture of intake air and water enters the supercharger (12).

2. The supercharging system of claim 1, characterized in that the water feed mechanism (21) includes a water tank (22) and a valve (23) connected between the water tank (22) and intake air pipe (11a) for adjusting an amount of water to be mixed with the intake air.

3. The supercharging system of claim 1 or 2, characterized in that the supercharger (12) is a positive displacement supercharger.

4. The supercharging system of claim 3, characterized in that the positive displacement supercharger (12) is a screw supercharger.

5. The supercharging system of claim 2, 3 or 4, characterized in that the valve (23) is a duty solenoid valve.

6. The supercharging system of any one of claims 1 to 5, characterized in that the water feed mechanism (21) feeds the water such that the water is 5 to 20% of the intake air in weight.

7. The supercharging system of any one of claims 2 to 6, characterized in that the valve (23) adjusts the amount of water such that the water-air mixture includes 5 to 20% of water in weight.

8. The supercharging system of any one of foregoing claims, characterized in that an optimum amount of water to be fed is determined in such a manner to minimize a work needed to drive the supercharger (12).

9. The supercharging system of any one of claims 2 to 8, characterized in that the valve (23) adjusts the amount of water such that a work needed to drive the supercharger (12) is minimized.

10. The supercharging system of any one of claims 5 to 9, characterized in that a duty ratio of the duty solenoid valve (23) is controlled such that the water-air mixture includes 5 to 20% of water in weight.

11. The supercharging system of any one of foregoing claims, characterized in that the engine (10) is not equipped with an intercooler.

12. The supercharging system of any one of foregoing claims, characterized in that fuel injection takes place inside or just upstream of the engine (10) or downstream of the supercharger (12).

13. The supercharging system of any one of claims 2 to 4 and 6 to 12, characterized in that the valve (23) is a valve controlled by a stepping motor.

14. The supercharging system of any one of claims 2 to 13, characterized in that the system further includes a sensor (22a) for detecting an amount of water remaining in the water tank (22).

15. A method of controlling a supercharger (12) connected to an intake air pipe (11) extending to an engine (10), comprising the steps of:
A) providing a water feed mechanism (21) connected to the intake air pipe (11a) upstream of the supercharger (12); and
B) feeding water to an intake air flowing in the intake air pipe (11) from the water feed mechanism (21) before the intake air enters the supercharger (12).

16. The method of claim 15, characterized in that the water feed mechanism (21) includes a water tank (22) and a valve (23) connected between the water tank (22) and intake air pipe (11a) for adjusting an amount of water to be mixed with the intake air.

17. The method of claim 15 or 16, characterized in that the supercharger (12) is a positive displacement supercharger.

18. The method of claim 17, characterized in that the positive displacement supercharger (12) is a screw supercharger.

19. The method of claim 15, 16, 17 or 18, characterized in that the valve (23) is a duty solenoid valve or a valve controlled by a stepping motor.

20. The method of claim 16, 17, 18 or 19, characterized in that the valve (23) adjusts the amount of intake air such that the water to be fed is 5 to 20% of the intake air in weight.

21. The method of any one of claims 15 to 20, characterized in that the method further includes the step of not providing the engine (10) with an intercooler.

22. The method of any one of claims 15 to 21, characterized in that an amount of water to be fed is determined in such a manner to minimize a work needed to drive the supercharger (12).

23. The method of claim 19, 20, 21 or 22, characterized in that a duty ratio of the duty solenoid valve (23) is controlled such that the water-air mixture includes 5 to 20% of water in weight.

24. The method of any one of claims 15 to 23, characterized in that fuel injection takes place inside or just upstream of the engine (10) or downstream of the supercharger (12).

25. The method of any one of claims 16 to 24, characterized in that the method further includes the step of detecting an amount of water remaining in the water tank (22).
